(19)

Europäisches
Patentamt
European
Patent Office
Office européen
des brevets

(11) **EP 3 979 648 A1**

(12) **DEMANDE DE BREVET EUROPEEN**

(43) Date de publication:
**06.04.2022 Bulletin 2022/14**

(21) Numéro de dépôt: **21199859.6**

(22) Date de dépôt: **29.09.2021**

(51) Classification Internationale des Brevets (IPC):
*H04N 19/51* (2014.01)   *H04N 19/80* (2014.01)
*G06N 3/02* (2006.01)   *G06N 3/08* (2006.01)
*G06T 7/269* (2017.01)   *G06T 7/579* (2017.01)
*G06T 5/00* (2006.01)   *G06T 5/50* (2006.01)

(52) Classification Coopérative des Brevets (CPC):
**H04N 19/80; G06N 3/02; G06N 3/088; G06T 5/001;**
**G06T 5/50; H04N 19/51;** G06T 2207/20084

(84) Etats contractants désignés:
**AL AT BE BG CH CY CZ DE DK EE ES FI FR GB**
**GR HR HU IE IS IT LI LT LU LV MC MK MT NL NO**
**PL PT RO RS SE SI SK SM TR**
Etats d'extension désignés:
**BA ME**
Etats de validation désignés:
**KH MA MD TN**

(30) Priorité: **30.09.2020 FR 2009966**

(71) Demandeur: **COMMISSARIAT À L'ÉNERGIE**
**ATOMIQUE ET AUX**
**ÉNERGIES ALTERNATIVES**
**75015 Paris (FR)**

(72) Inventeurs:
• **BOUVIER, Maxence**
**38054 GRENOBLE (FR)**
• **VALENTIAN, Alexandre**
**38054 GRENOBLE (FR)**

(74) Mandataire: **Lavoix**
**2, place d'Estienne d'Orves**
**75441 Paris Cedex 09 (FR)**

(54) **DISPOSITIF DE COMPENSATION DU MOUVEMENT D'UN CAPTEUR ÉVÉNEMENTIEL ET SYSTÈME D'OBSERVATION ET PROCÉDÉ ASSOCIÉS**

(57)   L'invention concerne un dispositif de compensation du mouvement d'un capteur événementiel (12) dans un flux d'événements initial généré en observant un environnement, le capteur événementiel (12) générant des informations représentant chaque événement initial dans un premier espace sous forme d'un champ d'adresse d'un pixel (20) et d'un champ d'instant de génération de l'événement initial, le dispositif (16) comprenant :
- une unité de projection (34) projetant le flux initial depuis le premier espace vers un deuxième espace, le flux projeté étant des événements projetés associés à des événements initiaux, et générant des informations représentant chaque événement projeté dans le deuxième espace sous forme d'un champ d'adresse d'un pixel (20), d'un e champ d'instant caractéristique et d'un champ de valeur relative à l'ensemble d'événements initiaux, et
- une unité de compensation (36) recevant des mesures du mouvement du capteur événementiel (12) et appliquant une technique de compensation au flux projeté.

FIG.1

# Description

La présente invention concerne un dispositif de compensation du mouvement d'un capteur événementiel dans un flux d'événements généré lors d'une observation d'un environnement. La présente invention se rapporte aussi à un système d'observation d'un environnement comprenant le dispositif de compensation précédent. La présente invention se rapporte aussi à un procédé de compensation correspondant.

Dans le domaine de la vidéosurveillance embarquée, une difficulté est d'analyser un grand volume d'images au sein duquel de nombreuses images ne sont pas pertinentes. En effet, cela implique d'importantes ressources matérielles et donc une grande consommation d'énergie, ce qui est incompatible avec les contraintes d'un système embarqué, à savoir un poids, un encombrement et une puissance énergétique limités.

Une voie prometteuse pour répondre à un tel enjeu est d'utiliser un capteur événementiel.

Un capteur DVS ou un capteur ATIS sont deux exemples d'un tel capteur. L'abréviation DVS renvoie à la dénomination anglaise de « *Dynamic Vision Sensor* » qui signifie littéralement capteur de vision dynamique alors que l'acronyme ATIS renvoie à la dénomination anglaise de « *Asynchronous Time-based Image Sensor* » qui signifie littéralement capteur asynchrone d'image basée sur le temps.

Les imageurs traditionnels fournissent des images, à savoir une succession de matrices qui codent les valeurs d'intensités lumineuses mesurées par une grille de pixels à une fréquence régulière. Au lieu de cela, un capteur événementiel génère un flux d'événements asynchrone et peu dense puisqu'un pixel génère un événement uniquement lorsqu'un gradient d'intensité sur le pixel dépasse un certain seuil.

Un capteur événementiel permet donc qu'aucune donnée ne soit émise lorsque rien ne se passe devant le capteur événementiel, ce qui limite fortement le nombre de données à traiter.

En outre, du fait du fonctionnement asynchrone, de tels capteurs permettent également de bénéficier d'une plage dynamique et d'une fréquence d'acquisition élevées. Notamment, pour certains capteurs, le taux d'événements qui peuvent être générés peut s'élever jusqu'à 10 GeV/s (GeV/s signifie « Giga Evénements par seconde » et représente le nombre de milliards d'événements par secondes contenus dans un flux d'événements).

Toutefois, une telle fréquence d'acquisition implique en retour une puissance de calcul importante pour pouvoir traiter les événements du flux d'événements.

A cette difficulté, s'ajoute le fait que la charge de calcul est, par nature, non prédictible de sorte qu'il est difficile de traiter les données avec une efficacité maximale (qui est souvent obtenue lors que le traitement est mis en œuvre avec une charge maximale).

En outre, du fait de son bruit intrinsèque, un capteur événementiel génère des événements parasites, ce qui augmente encore inutilement la charge de calcul.

De plus, lorsque le capteur événementiel se déplace, différents pixels émettent des impulsions même en présence d'un objet immobile. Il en résulte une redondance spatiale impliquant là encore de nombreux calculs inutiles.

Il existe donc un besoin pour un dispositif de compensation des défauts introduits par un capteur événementiel dans un flux d'événements généré lors d'une observation d'un environnement qui réduit la capacité calculatoire requise pour permettre une implémentation physique dans un système embarqué tout en conservant les informations utiles captées par le capteur événementiel.

A cet effet, la description décrit un dispositif de compensation du mouvement d'un capteur événementiel dans un flux d'événements généré dans un intervalle de temps, dit flux d'événements initial, le flux d'événements initial étant généré par le capteur événementiel lors d'une observation d'un environnement dans l'intervalle de temps, le capteur événementiel comportant des pixels et une unité de lecture, chaque pixel étant propre à générer un événement initial du flux d'événements initial, l'unité de lecture étant propre à générer des informations représentant chaque événement initial sous forme d'une première pluralité de champs d'information dans un premier espace, la première pluralité de champs d'information comprenant un premier champ d'information correspondant à l'adresse du pixel qui a généré l'événement initial et un deuxième champ d'information correspondant à l'instant de génération de l'événement par le pixel qui a généré l'événement initial. Le dispositif de compensation comprend une unité de projection, l'unité de projection étant propre à projeter le flux d'événements initial depuis le premier espace vers un deuxième espace par utilisation d'une fonction de projection pour obtenir un flux d'événements projeté, le flux d'événements projeté étant un ensemble d'événements projetés, chaque événement projeté étant associé à un ensemble d'événements initiaux provenant d'un groupe de pixels respectif, l'unité de projection étant propre à générer des informations représentant chaque événement projeté sous forme d'une pluralité de champs d'information dans le deuxième espace, la deuxième pluralité de champs d'information comprenant un premier champ d'information correspondant à l'adresse d'un pixel associé à l'événement projeté, un deuxième champ d'information étant un instant caractéristique de l'événement projeté et un troisième champ d'information étant une valeur relative à l'ensemble d'événements initiaux auquel l'événement projeté est associé. Le dispositif de compensation comprenant, en outre, une unité de compensation, l'unité de compensation étant propre à recevoir des mesures du mouvement du capteur événementiel pendant l'intervalle de temps, et propre à appliquer une technique de compensation au flux d'événements projeté en fonction des mesures reçues pour obtenir un flux d'événements compensé dans l'intervalle de temps.

Selon des modes de réalisation particuliers, le dispositif de compensation présente une ou plusieurs des caractéristiques suivantes, prise(s) isolément ou selon toutes les combinaisons techniquement possibles :

- l'unité de projection projetant le flux d'événements initial vers le deuxième espace pour que le rapport entre le nombre d'événements initiaux du flux d'événements initial et le nombre d'événements projetés du flux d'événements projeté soit strictement supérieur à 1.
- l'unité de projection est un dispositif implémentant un réseau de neurones.
- le réseau de neurones comporte une seule couche cachée.
- la fonction de projection est un filtre convolutif à plusieurs noyaux de convolution, chaque noyau étant associée à un canal, le réseau de neurones étant ainsi un réseau de neurones convolutifs à impulsion et, dans lequel, pour chaque événement projeté, le troisième champ d'information comporte l'identifiant du canal du noyau de convolution auquel appartient ledit événement projeté.
- chaque noyau de convolution est un ensemble de champs récepteurs avec un motif identique, deux champs récepteurs successifs étant séparés d'un espacement, le nombre de noyaux de convolution, l'espacement et la taille des champs récepteurs étant choisis pour que le rapport entre le nombre d'événements projetés du flux d'événements projeté et le nombre d'événements initiaux du flux d'événements initial soit compris entre 1,5 et 100.
- pour chaque événement projeté, l'instant caractéristique de l'événement projeté est choisi dans la liste constituée d'un instant obtenu par application d'une fonction sur l'ensemble des instants auquel un neurone du réseau de neurones a reçu une activation, et d'un instant obtenu par application d'une fonction sur au moins un instant de génération d'un événement initial parmi l'ensemble des événements initiaux auquel l'événement projeté est associé.
- l'unité de projection et l'unité de compensation sont réalisées sur un même circuit intégré.
- chaque pluralité de champ d'informations comporte un champ d'information supplémentaire, le champ d'information supplémentaire étant le signe du gradient d'intensité mesuré par le pixel à l'instant de génération de l'impulsion, la valeur d'intensité lumineuse à l'instant de génération de l'impulsion ou la valeur du gradient d'intensité mesuré par le pixel à l'instant de génération de l'impulsion.
- la technique de compensation comporte l'application d'au moins une opération choisie parmi une correction de la distorsion introduite par une optique de collection du capteur événementiel, une multiplication du flux d'événements enrichis par une matrice de rotation correspondant aux mouvements en rotation du capteur événementiel, et une addition au flux d'événements enrichis d'une matrice de translation correspondant aux mouvements en translation du capteur événementiel.

La description décrit aussi un système d'observation d'un environnement, le système d'observation comprenant un capteur événementiel générant un flux d'événements lors d'une observation de l'environnement, le capteur événementiel comportant des pixels et une unité de lecture, chaque pixel étant propre à générer un événement initial du flux d'événements initial, l'unité de lecture étant propre à générer des informations représentant chaque événement initial sous forme d'une pluralité de champs d'information dans un premier espace, la première pluralité de champs d'information comprenant un premier champ d'information correspondant à l'adresse du pixel qui a généré l'événement initial et un deuxième champ d'information correspondant à l'instant de génération de l'événement par le pixel qui a généré l'événement initial. Le système d'observation comporte, en outre, une unité de mesure propre à mesurer le mouvement du capteur événementiel pendant un intervalle de temps, et un dispositif de compensation tel que précédemment décrit.

Selon des modes de réalisation particuliers, le système d'observation présente une ou plusieurs des caractéristiques suivantes, prise(s) isolément ou selon toutes les combinaisons techniquement possibles :

- le système d'observation comporte, en outre, une unité de détermination, l'unité de détermination étant propre à déterminer, pour chaque événement projeté du flux d'événements compensé, la nature mobile ou immobile d'un objet associé à l'événement projeté, l'objet étant l'objet de l'environnement par le capteur événementiel ayant entraîné la génération de l'ensemble d'événements associé à l'événement projeté, et une unité de modification, l'unité de modification étant propre à modifier la fonction de projection selon si l'objet est mobile ou fixe.
- le capteur événementiel et le dispositif de compensation font partie d'un même composant comportant un empilement d'au moins trois couches, la première couche de l'empilement comportant le capteur événementiel, la deuxième couche de l'empilement comportant l'unité de projection et la troisième couche comportant l'unité de compensation.
- l'unité de compensation est réalisée sur un autre composant, le composant et l'unité de compensation étant rapportés sur un substrat comprenant des connexions électriques.
- le substrat est un interposeur.

La présente description propose également un procédé de compensation du mouvement d'un capteur événementiel dans un flux d'événements généré dans un intervalle de temps, dit flux d'événements initial, le flux d'événements initial étant généré par le capteur événementiel lors d'une observation d'un environnement dans l'intervalle de temps, le capteur événementiel comportant des pixels et une unité de lecture, chaque pixel étant propre à générer un événement initial du flux d'événements initial, l'unité de lecture étant propre à générer des informations représentant chaque événement initial sous forme d'une première pluralité de champs d'information dans un premier espace, la première pluralité de champs d'information comprenant un premier champ d'information correspondant à l'adresse du pixel qui a généré l'événement initial et un deuxième champ d'information correspondant à l'instant de génération de l'événement par le pixel qui a généré l'événement initial, le procédé de compensation étant mis en œuvre par un dispositif de compensation mouvement du capteur événementiel dans le flux d'événements généré dans un intervalle de temps et comprenant une étape de projection le flux d'événements initial depuis le premier espace vers un deuxième espace par utilisation d'une fonction de projection pour obtenir un flux d'événements projeté, le flux d'événements projeté étant un ensemble d'événements projetés, chaque événement projeté étant associé à un ensemble d'événements initiaux provenant d'un groupe de pixels respectif, l'étape de projection comprenant la génération des informations représentant chaque événement projeté sous forme d'une pluralité de champs d'information dans le deuxième espace, la deuxième pluralité de champs d'information comprenant un premier champ d'information correspondant à l'adresse d'un pixel associé à l'événement projeté, un deuxième champ d'information étant un instant caractéristique de l'événement projeté et un troisième champ d'information étant une valeur relative à l'ensemble d'événements initiaux auquel l'événement projeté est associé. Le procédé de compensation comprenant, en outre, une étape de compensation comprenant l'application d'une technique de compensation au flux d'événements projeté en fonction de mesures reçues du mouvement du capteur événementiel pendant l'intervalle de temps pour obtenir un flux d'événements compensé dans l'intervalle de temps.

Des caractéristiques et avantages de l'invention apparaîtront à la lecture de la description qui va suivre, donnée uniquement à titre d'exemple non limitatif, et faite en référence aux dessins annexés, sur lesquels :

- la figure 1 est une vue schématique d'un exemple de système d'observation,
- la figure 2 est une représentation d'un exemple de réseau de neurones utilisé par le système d'observation de la figure 1,
- la figure 3 est une représentation schématique du fonctionnement d'une partie du réseau de neurones de la figure 2,
- la figure 4 est une représentation graphique d'un flux d'événements initial et d'un flux d'événements projeté, le flux d'événement projeté étant obtenu par simulation pour un premier jeu de paramètres pour le réseau de neurones de la figure 2,
- la figure 5 est une représentation graphique d'un flux d'événements initial et d'un flux d'événements projeté, le flux d'événement projeté étant obtenu par simulation pour un deuxième jeu de paramètres pour le réseau de neurones de la figure 2,
- la figure 6 est une représentation graphique d'un flux d'événements initial et d'un flux d'événements projeté, le flux d'événement projeté étant obtenu par simulation pour un troisième jeu de paramètres pour le réseau de neurones de la figure 2,
- la figure 7 est une représentation graphique d'un flux d'événements initial et d'un flux d'événements projeté, le flux d'événement projeté étant obtenu par simulation pour un quatrième jeu de paramètres pour le réseau de neurones de la figure 2,
- la figure 8 est une représentation graphique d'un flux d'événements projeté et d'un flux d'événements compensé, le flux d'événements compensé étant obtenu par simulation à partir du flux d'événements projeté représenté,
- la figure 9 est une représentation schématique d'un exemple d'implémentation physique d'un système d'observation selon la figure 1,
- la figure 10 est une représentation schématique d'un autre exemple d'implémentation physique d'un système d'observation selon la figure 1,
- la figure 11 est une représentation schématique d'encore un autre exemple d'implémentation physique d'un système d'observation selon la figure 1, et
- la figure 12 est une vue schématique d'un autre exemple de système d'observation. Un système d'observation 10 est illustré schématiquement sur la figure 1.

La représentation est schématique dans la mesure où il s'agit d'une représentation de type fonctionnelle par bloc permettant de bien appréhender le fonctionnement du système d'observation 10.

Le système d'observation 10 est propre à observer un environnement.

Le système d'observation 10 comporte un capteur événementiel 12, une unité de mesure 14 et un dispositif de compensation 16.

Le capteur événementiel 12 est propre à générer un flux d'événements F1 par observation de l'environnement dans un intervalle de temps, dit intervalle de temps d'observation.

Pour la suite, le flux d'événements F1 généré dans l'intervalle de temps d'observation est nommé « flux d'événements initial F1 ».

Le flux d'événements initial F1 est un flux généralement peu dense.

Comme indiqué précédemment, le flux généré est asynchrone, ce qui permet que le capteur événementiel 12 fonctionne à une fréquence élevée.

Plus précisément, le capteur événementiel 12 comporte un ensemble de pixels 20 agencés selon une matrice de pixels 22, une optique de collection 23 et un système de lecture 24.

Chaque pixel 20 est propre à générer un événement sous forme d'une impulsion. Une telle impulsion est souvent usuellement dénommée « *spike* » en référence à la terminologie anglaise correspondante.

Pour générer un événement, chaque pixel 20 mesure en permanence l'intensité lumineuse incidente à l'aide d'une photodiode et compare à tout instant la différence relative entre l'intensité lumineuse $I_{curr}$ mesurée à un instant t et l'intensité lumineuse $I_{prev}$ mesurée à l'instant immédiatement précédent à un seuil de contraste $C_{th}$ selon la formule suivante :

$$\frac{I_{curr} - I_{prev}}{I_{prev}} \geq C_{th}$$

Lorsque la condition précédente est remplie, le pixel 20 génère une impulsion.

En variante, d'autre conditions peuvent être utilisées.

Par exemple, la condition est que l'intensité mesurée soit supérieure ou égale à un seuil ou que le temps mis pour atteindre une intensité prédéterminée est inférieur ou égal à un seuil.

Néanmoins, dans chacun des cas, la génération d'impulsion n'a lieu que si la condition est remplie pour garantir un fonctionnement à haute cadence du capteur événementiel 12.

Une telle impulsion est souvent exprimée selon le protocole AER. Le sigle AER renvoie à la dénomination anglaise de « *Address Event Représentation* » qui signifie littéralement représentation de l'adresse de l'événement.

Toutefois, d'autres représentations comme des représentations analogiques (par exemple, par l'émission de plusieurs impulsions pour coder une information) sont également possibles.

L'optique de collection 23 permet de collecter la lumière incidente et de la guider vers la matrice de pixels 22.

Selon l'exemple décrit, l'optique de collection 23 est une matrice de microlentilles dont chaque microlentille est associée à un unique pixel 20.

Par exemple, chaque microlentille de l'optique de collection 23 est une optique hypergone.

Une telle optique est plus souvent dénommée optique fisheye (qui signifie littéralement œil de poisson) en référence à son champ de vision très grand.

Ce très grand champ implique que l'optique de collection 23 introduit une grande distorsion qu'il convient de compenser.

D'autres aberrations géométriques peuvent également être introduits par l'optique de collection 23 comme un vignetage.

Le système de lecture 24 est un ensemble de circuit électronique générant des informations représentant chaque événement initial sous forme d'une première pluralité de champs d'information dans un premier espace.

Avec un tel formalisme, pour l'exemple décrit, l'impulsion est un triplet à trois éléments A1, A2 et A3.

Le premier champ d'information A1 est l'adresse du pixel 20 qui a généré l'impulsion.

L'adresse du pixel 20 est, par exemple, encodée en donnant le numéro de ligne et le numéro de colonne de la matrice de pixels 22 où est situé le pixel 20.

En variante, un codage du type $y*x_{max} + x$ ou $x*y_{max} + y$ peut être utilisé. Dans la formule précédente, x désigne le numéro de la colonne du pixel 20, y le numéro de la ligne du pixel 20, $x_{max}$ le nombre de colonnes et $y_{max}$ le nombre de lignes de la matrice de pixels 22.

Le deuxième champ d'information A2 est l'instant de génération de l'impulsion par le pixel 20 qui a généré l'impulsion.

Cela implique que le capteur événementiel 12 est capable d'horodater la génération d'impulsions avec une bonne précision pour faciliter les traitements ultérieurs du flux d'événements initial F1.

Le troisième champ d'information A3 est une valeur relative à l'impulsion.

Dans la suite, à titre d'exemple, le troisième champ d'information A3 est la polarité de l'impulsion.

La polarité d'une impulsion est définie comme le signe du gradient d'intensité mesuré par le pixel 20 à l'instant de génération de l'impulsion.

Selon d'autres modes de réalisation, le troisième champ d'information A3 est la valeur d'intensité lumineuse à l'instant de génération de l'impulsion, la profondeur observée si le capteur événementiel 12 a pour but de mesurer la profondeur, ou encore la valeur précise du gradient d'intensité mesuré.

En variante, la pluralité de champs d'information dans le premier espace comporte uniquement le premier champ d'information A1 et le deuxième champ d'information A2.

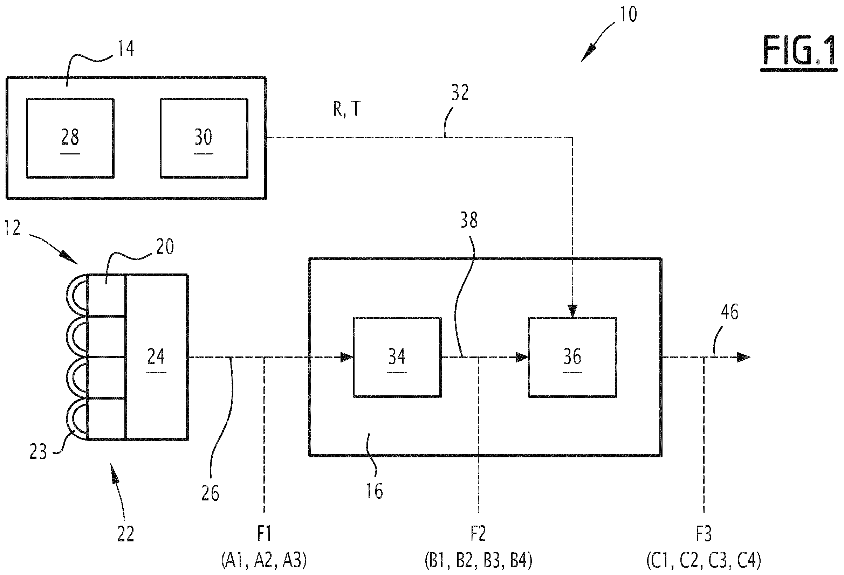

Le système de lecture 24 est propre à assurer l'acheminement du flux d'événements initial F1 vers le dispositif de compensation 16. Cet acheminement est représenté schématiquement par la flèche 26 sur la figure 1.

Comme également visible sur la figure 1 en-dessous de la flèche 26, la sortie du capteur événementiel 12 est le flux d'événements initial F1 dont chaque événement est une impulsion caractérisée par un triplet (A1, A2, A3).

L'unité de mesure 14 est une unité de mesure de mouvement.

L'unité de mesure 14 est propre à mesurer le mouvement du capteur événementiel 12.

Selon l'exemple proposé, l'unité de mesure 14 est une centrale inertielle.

Une telle centrale inertielle est parfois appelée centrale à inertie ou plus souvent sous l'abréviation IMU qui renvoie à la dénomination anglaise de « *Inertial Measurement Unit* ».

L'unité de mesure 14 comporte ainsi des gyromètres 28 et des accéléromètres 30 permettant de mesurer les mouvements en rotation et en translation du capteur événementiel 12.

Selon les cas, les données de sortie de l'unité de mesure 14 de mouvement peuvent être des données brutes ou intégrées.

Par exemple, les données intégrées sont exprimées sous la forme d'une matrice de rotation R correspondant aux mouvements en rotation du capteur événementiel 12 ou d'une matrice de translation T correspondant aux mouvements en translation du capteur événementiel 12.

En variante, les données relatives à la rotation sont fournies à l'aide d'un quaternion qui est généralement un vecteur à quatre valeurs dont une valeur normalisée, les autres valeurs caractérisant la rotation dans l'espace.

Le dispositif de compensation 16 est un dispositif propre à compenser les mouvements du capteur événementiel 12 dans le flux d'événements initial F1.

En ce sens, le dispositif de compensation 16 est un dispositif configuré pour mettre en œuvre un procédé de compensation du mouvement du capteur événementiel 12 dans le flux d'événements initial F1.

Le dispositif de compensation 16 de la figure 1 comporte une unité de projection 34 et une unité de compensation 36.

L'unité de projection 34 est propre à projeter le flux d'événements initial F1 depuis le premier espace vers un deuxième espace pour obtenir un flux d'événements projeté F2.

En ce sens, l'unité de projection 34 est configurée pour mettre en œuvre une étape du procédé de compensation qui est une étape de projection du flux d'événements initial F1 sur le deuxième espace.

En l'occurrence, pour mettre en œuvre une telle étape, l'unité de projection 34 utilise une fonction de projection pour diminuer la taille de stockage du flux d'événements.

Pour cela, le flux d'événements projeté F2 est un ensemble d'événements projeté dont chaque événement projeté est associé à un ensemble d'événements initiaux provenant d'un groupe de pixels respectif.

L'unité de projection 34 est propre à générer des informations représentant chaque événement projeté sous forme d'une deuxième pluralité de champs d'information dans le deuxième espace.

Dans l'exemple de la figure 1, la deuxième pluralité de champs d'information comporte quatre champs d'information B1, B2, B3 et B4.

Le premier champ d'information B1 correspond à l'adresse d'un pixel 20 associé à l'événement projeté.

Le deuxième champ d'information B2 est un instant caractéristique de l'événement projeté.

Des exemples d'instant caractéristique sont donnés dans ce qui suit.

Le troisième champ d'information B3 est une valeur relative à un événement de l'ensemble d'événements initiaux auquel l'événement projeté est associé.

Selon l'exemple décrit, le troisième champ d'information B3 est la polarité d'une impulsion, les autres valeurs proposées pour le troisième champ d'information A3 pouvant également être utilisée.

Le quatrième champ d'information B4 est une valeur relative à l'ensemble d'événements initiaux auquel l'événement projeté est associé.

Ainsi, dans l'exemple de la figure 1, un événement projeté est caractérisé par un quadruplet B1, B2, B3 et B4.

En variante, la pluralité de champs d'information dans le deuxième espace comporte uniquement le premier champ d'information B1, le deuxième champ d'information B2 et le quatrième champ d'information B4.

L'unité de projection 34 est ainsi propre à créer des événements projetés qui sont des événements que l'on peut considérer comme des événements enrichis.

Chaque événement enrichi remplace un ensemble d'événements.

Selon l'exemple décrit, par rapport à un événement du flux d'événements initial F1, un événement enrichi comporte les mêmes informations que le triplet, à savoir les premiers éléments A1 et B1 qui donnent une information d'adresse, les deuxièmes éléments A2 et B2 qui donnent une information temporelle et les troisièmes éléments A3 et B3 qui donnent une information de polarité.

Néanmoins, l'événement projeté comporte une information additionnelle (quatrième élément B4) qui est une valeur relative à l'ensemble d'événements que l'impulsion remplace. L'événement projeté est donc un événement enrichi puisque l'événement comporte une information relative à des impulsions générées par d'autres pixels.

A titre d'exemple de valeur relative à l'ensemble d'événements que l'impulsion remplace, il peut être envisagé le nombre d'événements de l'ensemble d'événements, le nombre de pixels ayant généré l'ensemble d'événements ou les adresses des pixels de l'ensemble d'événements.

Une valeur codant valeur encodant pour un motif observable dans l'ensemble d'événements ou bien un histogramme relatif à l'ensemble d'événements pourrait également être envisager pour le quatrième champ d'information B4.

Selon l'exemple particulier correspondant au cas particulier de la figure 1, l'unité de projection 34 applique un filtre convolutif à plusieurs noyaux de convolution au flux d'événements initial F1.

Chaque noyau de convolution est associé à un canal respectif.

Dans l'exemple décrit, pour chaque événement enrichi, le quatrième champ d'information B4 est l'identifiant du canal de noyau de convolution auquel appartient ledit événement.

En variante ou en complément, le quatrième champ d'information B4 comporte d'autres données.

Le filtre peut être mis en œuvre par tout type de traitement mathématique.

A titre d'exemple, le filtre est un ensemble d'opérations de convolutions réalisées par des intégrations successives.

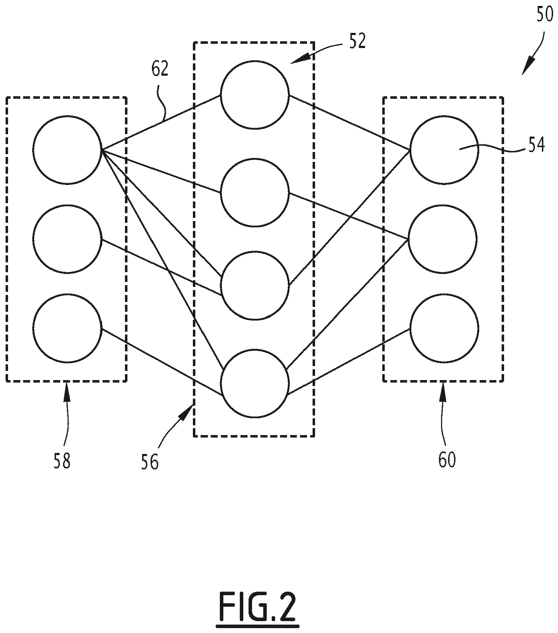

Alternativement, comme représenté sur la figure 2, le filtre de l'exemple est un réseau de neurones 50.

Le réseau de neurones 50 décrit est un réseau comportant une succession ordonnée de couches 52 de neurones 54 dont chacune prend ses entrées sur les sorties de la couche 52 précédente.

Plus précisément, chaque couche 52 comprend des neurones 54 prenant leurs entrées sur les sorties des neurones 54 de la couche 52 précédente.

Dans le cas de la figure 2, le réseau de neurones 50 décrit est un réseau comportant une unique couche de neurones cachée 56.

Le réseau de neurones 50 décrit est un réseau comportant une unique couche de neurones cachée 56. Cela signifie que le réseau de neurones 50 comporte une couche d'entrée 56 suivie par la couche de neurones cachée 58, elle-même suivie par une couche de sortie 60.

Chaque couche 52 est reliée par une pluralité de synapses 62. Un poids synaptique est associé à chaque synapse 62. C'est un nombre réel, qui prend des valeurs positives comme négatives. Pour chaque couche 52, l'entrée d'un neurone 54 est la somme pondérée des sorties des neurones 54 de la couche 52 précédente, la pondération étant faite par les poids synaptiques.

Il est aussi à noter que la couche cachée 56 n'est pas une couche entièrement connectée pour simplifier la charge calculatoire associé au réseau de neurones 50.

Une couche de neurones 52 entièrement connectée est une couche dans laquelle les neurones de la couche sont chacun connectés à tous les neurones de la couche précédente.

Un tel type de couche 52 est plus souvent dénommée selon le terme anglais de « fully connected ».

En l'occurrence, le réseau de neurones 50 est un réseau de neurones à impulsions.

Un réseau de neurones à impulsions est souvent dénommé par le sigle SNN qui renvoie à la dénomination anglaise de « Spike Neural Networks ».

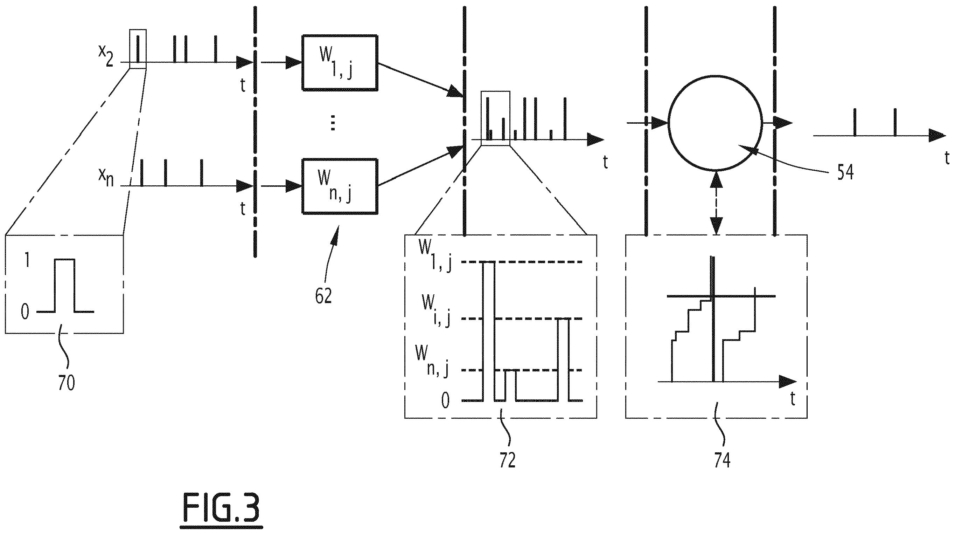

Aussi, le fonctionnement impulsionnel du réseau de neurones 50 peut être décrit en référence à la figure 3.

Il est considéré une synapse 62 reliant un neurone 54 situé avant la synapse 62 (le neurone 54 est un neurone pré-synaptique) à un neurone 54 situé après la synapse 62 (le neurone 54 est alors un neurone post-synaptique).

Lorsqu'une telle synapse 62 reçoit une impulsion (voir encadré 70 sur la figure 3), la synapse 62 émet un potentiel post-synaptique destiné à stimuler le neurone 54 post-synaptique.

Plus précisément, la synapse 62 effectue une multiplication entre le poids et l'activation d'entrée pour obtenir le potentiel post-synaptique (voir encadré 72 sur la figure 3). L'activation d'entrée est le signal de sortie envoyé par le neurone 54 pré-synaptique.

Il est à noter que, comme les impulsions et les poids sont signés, le potentiel post-synaptique l'est aussi. Par exemple, si une impulsion polarisée négativement arrive sur une synapse 62 pondérée positivement avec un coefficient positif $w_i$, alors le potentiel post-synaptique est négatif et égal à $-w_i$.

En outre, la stimulation envoyée par la synapse 62 est une stimulation d'une partie du neurone 54 post-synaptique appelée membrane et qui présente un potentiel.

En référence à l'encadré 74 sur la figure 3, le neurone 54 post-synaptique vient alors ajouter le potentiel post-synaptique à son potentiel de membrane, compare le potentiel de membrane obtenu à un seuil S et émet une impulsion de sortie lorsque le potentiel de membrane excède le seuil S.

Dans certains cas, le neurone 52 post-synaptique ajoute aussi des poids de biais au potentiel de membrane.

Du fait que le filtre est convolutif, le réseau de neurones 50 est un réseau de neurones convolutifs.

Un réseau de neurones convolutifs est aussi parfois dénommé réseau de neurones à convolution ou par le sigle CNN qui renvoie à la dénomination anglaise de « Convolutional Neural Networks ».

Dans un réseau de neurones convolutifs, chaque neurone présente exactement le même schéma de connexion que ses neurones voisins mais à différentes positions d'entrée. Le motif de connexion est appelé noyau de convolution ou, plus souvent, « kernel » en référence à la dénomination anglaise correspondante.

Un noyau de convolution est un ensemble de champs récepteurs avec un motif identique qui sera répété au-dessus sur la matrice de pixels 22.

Dans le présent exemple, les noyaux de convolution visent à détecter des bords (edges) orientés au sens où les bords correspondent à un changement brutal de polarité de part et d'autre du bord.

Selon l'exemple décrit, chaque champ récepteur présente une forme carrée.

En variante, chaque champ récepteur présente une forme en croix ou en ligne mais rien n'empêche l'emploi de motif de forme différente.

Par ailleurs, les coefficients de corrélation du noyau (c'est-à-dire les poids) sont des poids binaires dans l'exemple proposé.

Néanmoins, d'autres types de poids comme des poids à virgule flottante sont envisageables.

Selon l'exemple décrit, chaque champ récepteur présente une forme carrée.

En variante, chaque champ récepteur présente une forme en croix ou en ligne.

Un tel réseau de neurones convolutifs à impulsions est caractérisé par plusieurs paramètres qui sont le nombre de noyaux par neurones 54, la taille du champ récepteur, le seuil en tension, l'espacement entre champ récepteur, la précision du poids, la période réfractaire, le type de fuite et le taux de fuite.

D'autres paramètres peuvent également être envisagés en fonction du comportement des synapses. A titre d'illustration, certaines synapses utilisent des délais synaptiques pour mesurer le temps. La valeur des délais synaptiques est alors un paramètre caractérisant le réseau de neurones convolutifs à impulsions.

Le nombre de noyaux par neurones 54 est noté $N_k$.

En variante, il peut être envisagé des réseaux de neurones dont le nombre de noyaux par neurones 54 varie selon le neurone 54 considéré.

La taille du champ récepteur est notée $W_{RF}$ et est exprimée en pixels.

Le seuil en tension $V_s$ est la valeur à laquelle est comparée le potentiel de membrane du neurone 54 après réception de chaque impulsion. Si le potentiel de membrane est supérieur au seuil en tension $V_s$, le neurone 54 émet une impulsion.

L'espacement entre champ récepteur est noté s en référence à la dénomination anglaise correspondante de « stride ».

L'espacement s est mesuré entre deux centres de champ récepteur.

Comme l'espacement s affecte la taille des données codées, l'espacement s est souvent exprimé sous forme d'un nombre entier de pixels.

En variante, l'espacement s peut être codé en distance interneurones. Cela est notamment pertinent lorsque le neurone considéré reçoit des activations d'une couche antérieure.

La précision du poids $N_b$ est la précision en bits des valeurs des poids synaptiques.

Dans la mesure où plus un poids est précis, plus le poids va exiger une grande place en mémoire, il peut être considéré que le paramètre de la précision du poids $N_b$ est lié à la sollicitation de l'implémentation matérielle du réseau de neurones 50.

Les paramètres de période réfractaire $R_T$, de type de fuite et du taux de fuite sont les paramètres caractérisant deux mécanismes physiques temporels d'un neurone à impulsions.

Le premier mécanisme se caractérise par la période réfractaire $R_T$ qui est l'intervalle pendant lequel le neurone ne fonctionne pas après avoir émis une impulsion.

Autrement formulé, si le neurone a émis une impulsion à un instant $t_0$, aucune impulsion incidente n'est ajoutée à sa tension de membrane avant l'instant ultérieur $t_0 + R_T$.

Un tel mécanisme permet de réduire le nombre d'impulsions en sortie d'un neurone par une limitation de la fréquence des neurones de sortie. Grâce à un tel mécanisme, le taux de projection augmente et la redondance inutile des données est réduite.

Par définition, le taux de projection est le rapport entre le nombre d'impulsions en sortie de l'unité de projection 34 et le nombre d'impulsions en entrée de l'unité de projection 34.

Un compromis est à trouver pour la période réfractaire $R_T$ en un intervalle de temps trop court qui rendrait le premier mécanisme inutile et un intervalle de temps trop long qui entraînerait une trop grande perte d'informations.

En variante, le premier mécanisme est mis en œuvre en permettant l'ajout à la tension de membrane mais en interdisant la génération d'une impulsion tant que le temps écoulé depuis la génération de l'impulsion précédente est inférieur à la période réfractaire $R_T$ et ce, même si la condition relative à l'intensité lumineuse mesurée est remplie.

Le deuxième mécanisme physique est un phénomène de décohérence temporelle plus usuellement fuite ou « leakage » en référence à la terminologie anglaise.

Le mécanisme de fuite est appliqué sur le potentiel de membrane qui va donc décroître avec le temps en l'absence d'impulsions incidentes.

Le type de fuite est le type de fonction mathématique modélisant la décroissance temporelle du potentiel de la membrane.

A titre d'exemple, une telle décroissance est modélisée par une fonction linéaire ou une fonction exponentielle.

Dans le cas d'une fonction linéaire, la décroissance de la tension s'écrit ainsi :

$$V(t) = V_{imp}\left(1 - \alpha\left(t - t_{imp}\right)\right)$$

avec :

- $V_{imp}$ le potentiel de membrane lors de la réception de la dernière impulsion,
- $t_{imp}$ l'instant de réception de la dernière impulsion, et
- a une constante.

Dans un tel cas, le taux de fuite peut s'exprimer sous forme de la constante de temps $\alpha$ qui caractérise la rapidité de la décroissance temporelle du potentiel de la membrane.

Dans le cas d'une fonction exponentielle, la décroissance de la tension s'écrit ainsi :

$$V(t) = V_{imp}.e^{-\frac{t-t_{imp}}{\tau}}$$

avec :

- $V_{imp}$ le potentiel de membrane lors de la réception de la dernière impulsion,
- $t_{imp}$ l'instant de réception de la dernière impulsion, et
- $\tau$ une constante.

Dans un tel cas, le taux de fuite peut s'exprimer sous forme de la constante de temps $\tau$ qui caractérise la rapidité de la décroissance temporelle du potentiel de la membrane.

De manière générale, le taux de fuite est, selon l'exemple décrit, la constante de temps du type de fonction.

Le deuxième mécanisme se caractérise donc par le type de fonction et le taux de fuite.

Le deuxième mécanisme permet de conserver des informations temporelles compensant la perte apparente d'informations. A titre d'exemple, sans l'existence du mécanisme fuite, il est impossible de distinguer entre un premier cas d'une activation d'un neurone généré par deux impulsions proches temporellement (et donc a priori corrélées temporellement) et d'un deuxième cas avec deux mêmes impulsions espacées temporellement d'une heure (a priori non corrélées temporellement).

Le réseau de neurones 50 est ainsi caractérisé par un jeu de paramètres formé par l'ensemble des paramètres qui viennent d'être décrits.

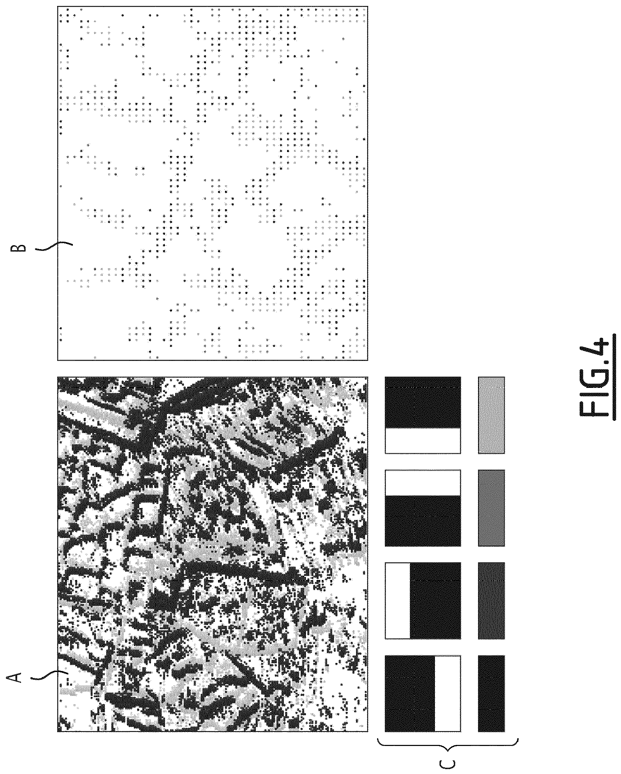

Des exemples de tels paramètres et de leur influence sur le fonctionnement de l'unité de projection 34 seront ultérieurement décrits en référence aux simulations des figures 4 à 8.

Plus spécifiquement, dans l'exemple décrit, les paramètres de l'unité de projection 34 sont choisis pour maximiser le taux de projection tout en minimisant la perte d'informations spatiales et temporelles contenues dans les données d'entrée de cette unité sous la contrainte que le nombre d'opérations à effectuer reste compatible avec les capacités calculatoires du système d'observation 10.

Les paramètres du jeu de paramètres de l'unité de projection 34 les plus impliqués dans le taux de projection sont l'espacement s entre champ récepteurs, le nombre $N_k$ de noyaux de convolution par neurones 54 et la période réfractaire $R_T$.

Selon les paramètres choisis, la demanderesse a obtenu par simulation un taux de projection compris entre 1,5 et 100, plus spécifiquement compris entre 5 et 15.

Il est ainsi obtenu un flux d'événements projeté F2.

L'unité de projection 34 est également propre à horodater les impulsions de sortie.

Un tel horodatage est à effectuer sur la base de l'instant auquel l'impulsion d'entrée correspondante a été générée.

Par exemple, une impulsion de sortie peut être horodatée à l'instant de génération d'une impulsion d'entrée ayant entraîné l'activation d'un neurone 52.

Selon un autre exemple, l'impulsion de sortie est horodatée à n'importe quel instant de génération d'une impulsion d'entrée parmi la pluralité d'impulsions d'entrée ayant entraîné l'activation d'un neurone 52. Par définition, il peut être considéré que la pluralité d'impulsions est l'ensemble des impulsions arrivées entre le dernier instant durant lequel le potentiel de membrane a une valeur nulle et l'instant d'activation du neurone 52.

Autrement formulé, l'instant caractéristique de l'événement projeté est un instant obtenu par application d'une fonction sur l'ensemble des instants auquel un neurone du réseau de neurones a reçu une activation ou un instant obtenu par application d'une fonction sur au moins un instant de génération d'un événement initial parmi l'ensemble des événements initiaux auquel l'événement projeté est associé.

Cela permet de conserver une bonne précision temporelle, ce qui permet d'assurer une bonne synchronisation entre les impulsions de sortie et les données relatives au mouvement du capteur événementiel 12.

La sortie de l'unité de projection 34 est reliée à l'entrée de l'unité de compensation 36 comme l'indique la flèche 38 sur la figure 1.

Comme également visible sur la figure 1 en dessous de la flèche 38, la sortie du l'unité de projection 34 est un flux d'événements projeté F2 dont chaque événement est une impulsion caractérisée par un quadruplet (B1, B2, B3, B4).

Cette notation montre bien que l'étape de projection est une étape de projection dans laquelle les informations contenues dans le flux d'événements initial F1, et plus précisément dans les événements supprimés, sont transformées en d'autres informations. La perte d'informations liée à l'unité de projection 34 est très faible bien que le taux de projection est relativement élevé (jusqu'à 15 selon les paramètres du réseau de neurones 50).

Autrement formulé, l'étape de projection permet d'augmenter l'entropie des événements pour compenser les événements supprimés du flux d'événements initial F1.

L'unité de compensation 36 est une unité de compensation du mouvement de la caméra événementiel 12 dans le flux d'événements initial F1.

En ce sens, l'unité de compensation 36 est configurée pour mettre en œuvre une étape du procédé de compensation, à savoir une étape de compensation du mouvement de la caméra événementiel 12 dans le flux d'événements initial F1.

De ce fait, l'unité de compensation 36 est parfois appelée une unité EMC, le sigle EMC renvoyant à la dénomination anglaise de « *ego-motion compensation* » qui signifie littéralement compensation du mouvement propre.

L'unité de compensation 36 prend en entrée le flux d'événements projeté F2 dont chaque événement est une impulsion caractérisée par un quadruplet (B1, B2, B3, B4).

L'unité de compensation 36 est propre à recevoir des mesures du mouvement du capteur événementiel 12 pendant l'intervalle de temps d'observation.

Plus spécifiquement, l'unité de compensation 36 reçoit les données relatives au mouvement du capteur événementiel 12 de l'unité de mesure 14 de mouvement qui sont, dans l'exemple décrit, la matrice de rotation R et la matrice de translation T.

L'unité de compensation 36 est également propre à appliquer une technique de compensation au flux d'événements projeté F2 en fonction des mesures reçues pour obtenir un flux d'événements compensé F3 dans l'intervalle de temps d'observation.

Selon l'exemple de la figure 1, la technique de compensation comporte une opération d'annulation de la distorsion introduite par l'optique de collection 23 suivie par d'une opération de compensation du mouvement du capteur événementiel 12.

Lors de l'opération d'annulation, le premier champ d'information A2 relatif à la position d'un pixel est modifié en prenant en compte la distorsion.

Il est à noter que l'opération d'annulation peut être remplacée ou complétée par une opération de compensation partielle des aberrations optiques introduites par l'optique de collection 23.

L'opération de compensation corrige la position des impulsions corrigées par l'opération d'annulation en fonction des mouvements du capteur événementiel 12.

L'opération de compensation permet de réduire au minimum le nombre d'impulsions émises.

En effet, avec le mouvement du capteur événementiel 12, différents pixels 20 génèrent des impulsions même en présence d'un objet immobile. L'opération de compensation permet que ces différentes impulsions ne soient pas répétées et soient attribuées au même pixel 20 (ou à défaut au même ensemble de pixels 20 si l'objet est étendu).

Ainsi, la quantité d'impulsions émises par le capteur événementiel 12 est grandement réduite grâce à l'unité de compensation 36.

Par exemple, l'opération de compensation des mouvements du capteur événementiel 12 comporte la mise en œuvre de deux sous-opérations successives pour chaque impulsion.

Lors de la première sous-opération, il est déterminé la valeur de la matrice de rotation R et de la matrice de translation T à l'instant de génération de l'impulsion. Une telle détermination est, par exemple, mise en œuvre par une interpolation, notamment entre les matrice de rotation R et de la matrice de translation T les plus proches de l'instant de génération de l'impulsion.

La deuxième sous-opération consiste alors à multiplier les coordonnées obtenues en sortie de la première opération avec la matrice de rotation R et d'ajouter ensuite la matrice de de translation T pour obtenir les coordonnées de l'impulsion après prise en compte du mouvement propre du capteur événementiel 12.

Selon un autre mode de réalisation, la technique de compensation est un algorithme d'apprentissage automatique.

Un tel algorithme est plus souvent désigné sous l'appellation de « machine learning » du fait de la terminologie anglaise correspondante.

Par exemple, l'algorithme est un réseau de neurones.

Comme visible sur la figure 1 en-dessous d'une flèche 46 représentant la sortie de la du dispositif de compensation 16 est un flux d'événements compensé F3 dont chaque événement est une impulsion caractérisée par un quadruplet (C1, C2, C3, C4)

La technique de compensation utilisée conserve la nature des champs d'informations. Le premier champ d'information C1 est ainsi une information de type spatiale, le deuxième champ d'information C2 est une information temporelle, le troisième champ d'information C3 est une valeur relative à un événement initial et le quatrième champ d'information C4 est une valeur relative à un événement projeté.

Le fonctionnement du système d'observation 10 est maintenant décrit en référence aux figures 4 à 8 qui sont des exemples de simulations de flux d'événements obtenus en sortie de l'unité de projection 34 et l'unité de compensation 36.

Les figures 4 à 7 montrent schématiquement l'effet de l'unité de projection 34 sur un flux d'événements initial F1.

Pour cela, est représenté à gauche le flux d'événements initial F1 sous forme d'une image en niveaux de gris (partie A des figures 4 à 7). Le niveau de gris le plus foncé (255) correspondant à une polarité négative, le niveau de gris le plus clair (0) correspondant à une polarité positive.

Le dégradé de couleur permet d'illustrer l'écoulement du temps, un point devenant plus proche du gris du milieu (128) au fur et à mesure du temps.

Une représentation différente est choisie à droite (partie B des figures 4 à 7) pour le flux d'événements projeté F2. Celui-ci est représenté sous forme de points codés en niveau de gris pour bien montrer qu'il s'agit d'événements projetés (codés sur 4 éléments dans l'exemple décrit) et non d'événements simples (codés sur 3 éléments dans l'exemple décrit).

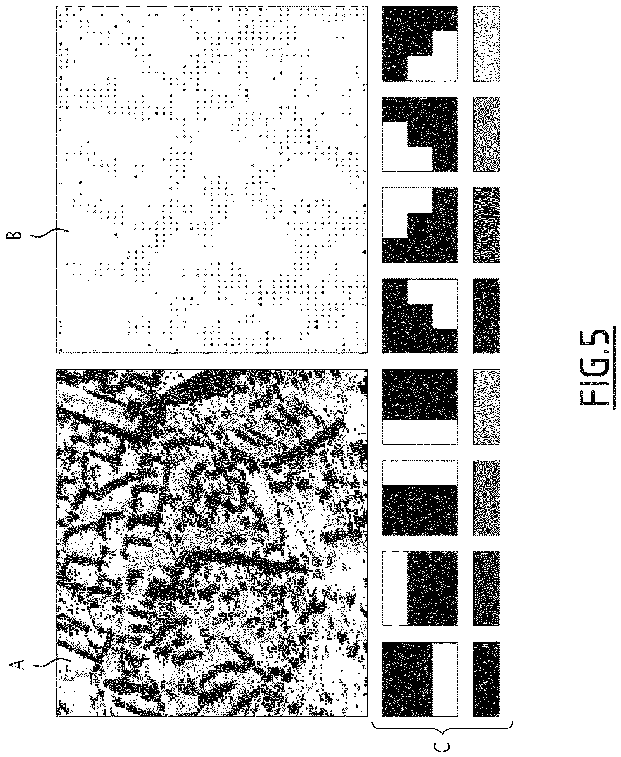

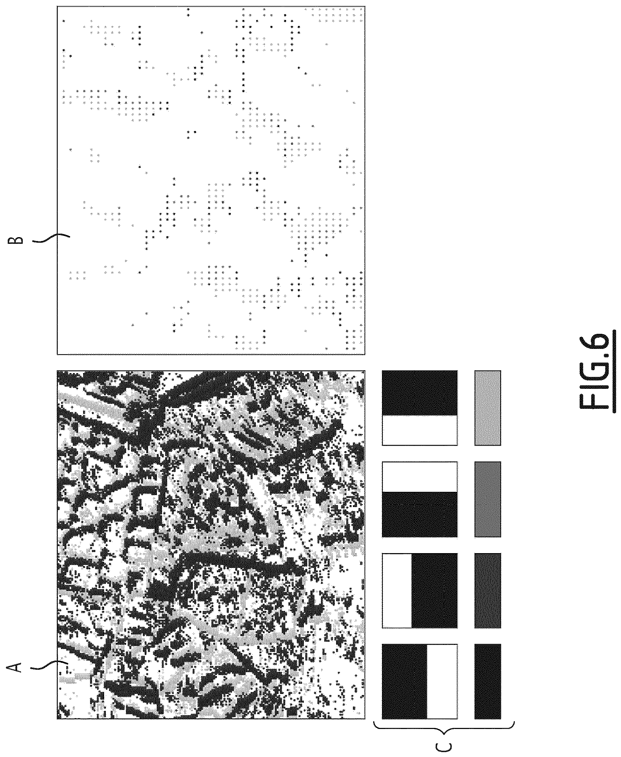

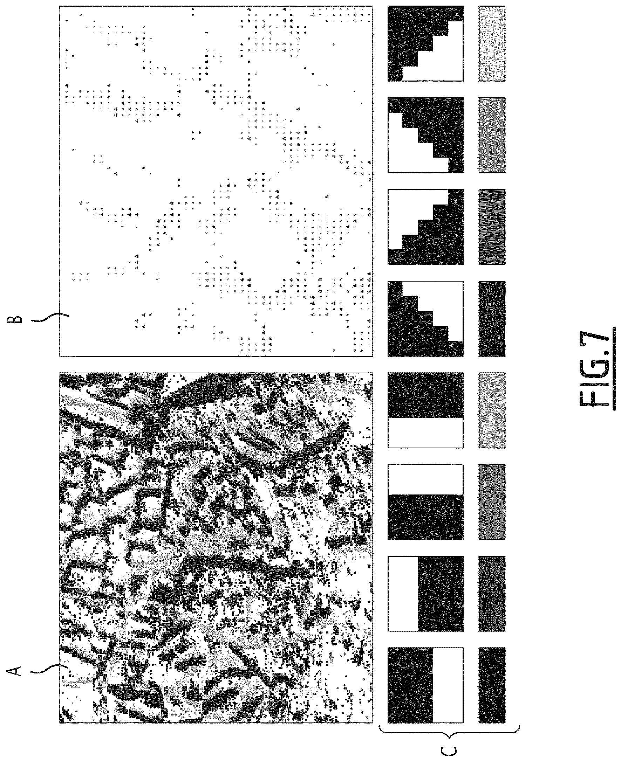

Pour le flux d'événements projeté F2, le codage en niveau de gris est différent puisque que le codage est fait selon quatre niveaux (cas des figures 4 et 6) ou huit niveaux (cas des figures 5 et 7) uniquement, chaque niveau correspondant à un noyau de convolution respectif.

Le motif de chaque noyau de convolution respectif est visible sur la partie C de chacune des figures 4 à 7, les quatre premiers motifs étant une ligne (pour l'ensemble des figures) et les quatre motifs suivants lorsqu'ils existent étant un escalier (partant respectivement d'un coin différent). Dans le cas de la figure 5, l'escalier comporte trois marches alors qu'il en comporte 5 dans le cas de la figure 7.

Chacune des figures 4 à 7 varient aussi par le jeu de paramètres utilisé pour l'unité de projection 34 et plus spécifiquement uniquement par la taille des champs récepteurs $W_{RF}$, le seuil en tension $V_s$ et le nombre de noyaux par neurones $N_k$.

Dans chacun des cas, l'espace de champs récepteurs s est fixé à 2 pixels, la période réfractaire $R_T$ à 5 millisecondes (ms), le type de fuite est exponentielle et le taux de fuite est de 10 ms.

Dans le cas de la figure 4, la taille des champs récepteurs $W_{RF}$ est égale à 3 pixels et le seuil en tension $V_s$ est fixé à 3, le nombre de noyaux par neurones $N_k$ est égal à 4. Le taux de projection obtenu est alors de 7.

La comparaison des parties A et B de la figure 4 montre visuellement que le nombre d'événements est fortement réduit dans le cas du flux d'événements projeté F2.

Dans le cas de la figure 5, la taille des champs récepteurs $W_{RF}$ est égale à 3 pixels, le seuil en tension $V_s$ est fixé à 3 et le nombre de noyaux par neurones $N_k$ est égal à 8. Le taux de projection obtenu est alors de 6,7.

La comparaison de la figure 4 et de la figure 5 montre que l'augmentation du nombre de noyaux par neurones augmente visuellement que la quantité d'informations augmente dans le flux d'événements projeté F2.

Dans le cas de la figure 6, la taille des champs récepteurs $W_{RF}$ est égale à 5 pixels, le seuil en tension $V_s$ est fixé à 9 et le nombre de noyaux par neurones $N_k$ est égal à 4. Le taux de projection obtenu est alors de 12,4.

La comparaison de la figure 4 et de la figure 6 montre que la taille des champs récepteurs $W_{RF}$ et le seuil en tension $V_s$ sont deux paramètres influençant fortement le taux de projection.

Dans le cas de la figure 7, la taille des champs récepteurs $W_{RF}$ est égale à 5 pixels, le seuil en tension $V_s$ est fixé à 9 et le nombre de noyaux par neurones $N_k$ est égal à 8. Le taux de projection obtenu est alors de 10,6.

La comparaison la figure 5 et de la figure 7 vient confirmer que la taille des champs récepteurs $W_{RF}$ et le seuil en tension $V_s$ sont deux paramètres influençant fortement le taux de projection, même pour un nombre de noyaux par neurones $N_k$ différent.

Dans chacun des cas, un taux de projection du flux d'événements initial F1 est obtenue avec un nombre d'opérations de réseau de neurones 50 relativement faibles.

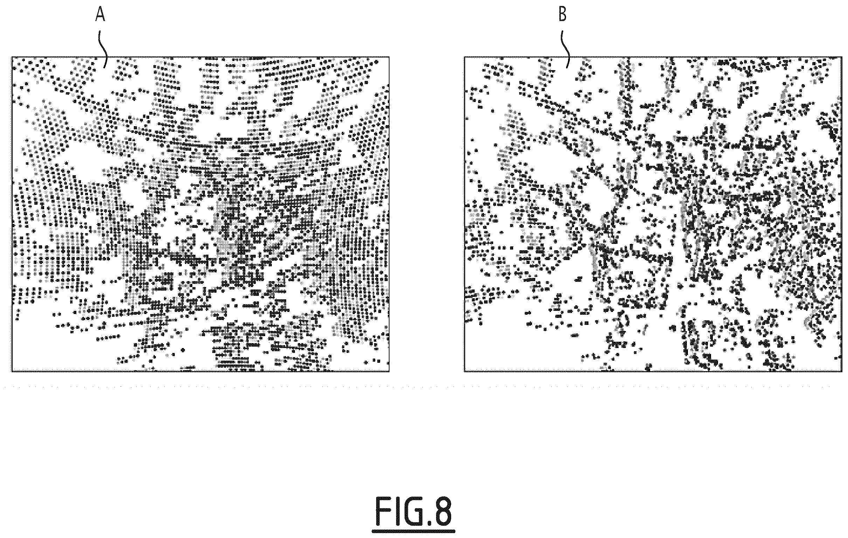

La figure 8 montre graphiquement l'effet de la mise en œuvre de l'étape de compensation sur un flux d'événements projeté F2 (image de gauche) pour obtenir un flux d'événements compensé F3 (image de droite).

L'association d'une étape de projection et d'une étape de compensation permet donc d'obtenir un procédé de compensation des défauts introduits par un capteur événementiel dans un flux d'événements généré lors d'une observation d'un environnement qui limite la capacité calculatoire requise.

Ce gain est notamment permis par le fait qu'un fort taux de projection est obtenu avec le réseau de neurones 50 et par l'emploi d'un format original de représentation d'un flux d'événements limitant les pertes d'information.

Grâce aux avantages précités, un tel système d'observation 10 est compatible avec une implémentation physique embarquée.

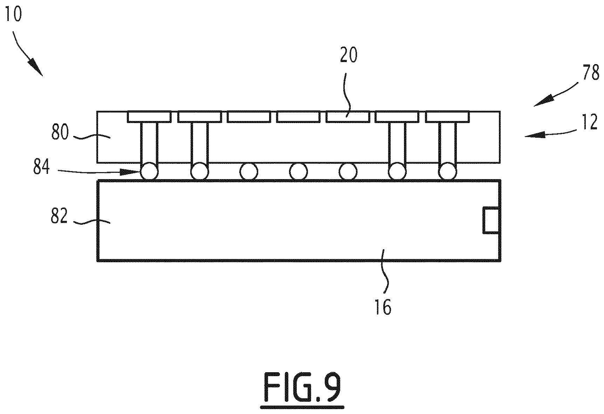

Un exemple d'une telle implémentation est maintenant décrit en référence à la figure 9.

Dans l'exemple illustré, le système d'observation 10 est un empilement 78 de deux couches 80 et 82 le long d'une direction d'empilement.

La première couche 80 et la deuxième couche 82 sont superposées.

Le capteur événementiel 12 est fabriqué dans la première couche 80.

Pour cela, une technique BSI est, par exemple, utilisée.

L'acronyme BSI renvoie à la terminologie anglaise de « Backside Illumination » signifiant littéralement illumination par l'arrière et désigne une technique de fabrication d'un capteur dans laquelle les photodiodes des pixels 20 sont positionnées en contact directe avec l'optique de collection 23.

Dans la deuxième couche 82, le dispositif de compensation 16 est réalisé sous la matrice de pixels 22.

Cela permet de limiter le système de lecture 24 à de simples connexions puisque l'accès parallèle à chaque pixel 20 est permis.

La deuxième couche 82 est reliée à la première couche 80 par des liaisons 84 tridimensionnelles cuivre-cuivre. Un tel type de liaison 84 est plus souvent dénommée 3D bonding en référence à la terminologie anglaise correspondante.

Pour ce qui concerne l'unité de projection 34 et donc l'implémentation physique du réseau de neurones 50, il est possible d'utiliser des cœurs dédiés à l'implémentation d'une partie du réseau de neurones 50 et de communiquer avec les autres cœurs via le protocole AER. Un tel cœur est plus souvent désigné sous la dénomination anglaise correspondante de « cluster ».

Lorsqu'il n'est pas possible d'implémenter physiquement l'unité de projection 34 et l'unité de compensation 36 sur la même couche 82 pour des questions d'encombrement, une troisième couche 86 est utilisée.

La troisième couche 86 fait partie de l'empilement 78 et est superposée avec la première couche 80 et la deuxième couche 82.

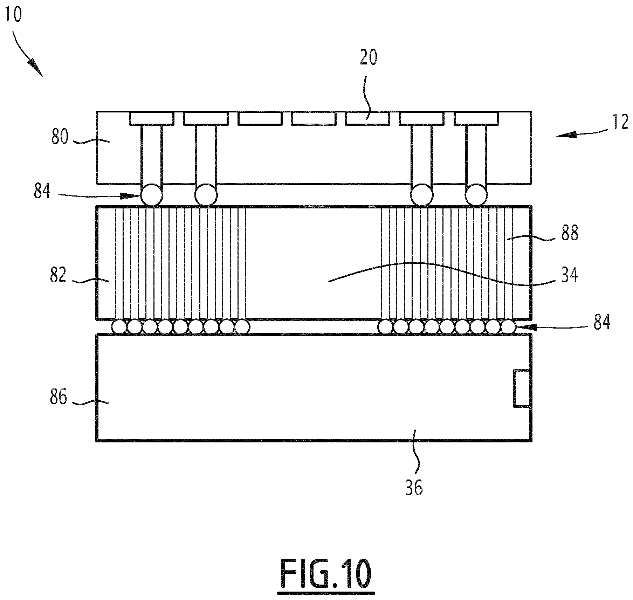

Dans une telle configuration illustrée schématiquement sur la figure 10, la deuxième couche 82 comprend l'unité de projection 34 alors que la troisième couche 86 comporte l'unité de compensation 36.

Pour assurer la communication entre la deuxième couche 82 et la troisième couche 86, la deuxième couche 82 est pourvue de vias traversants 88.

Un via traversant 88 est plus souvent désigné selon la terminologie anglaise de *« through-silicon via »* et désigne un contact électrique s'étendant le long de la direction d'empilement et débouchant, c'est-à-dire s'étendant d'une face de la deuxième couche 82 à l'autre face de la deuxième couche 82.

Une telle implémentation permet une communication de type parallèle entre la deuxième couche 82 et la troisième couche 86.

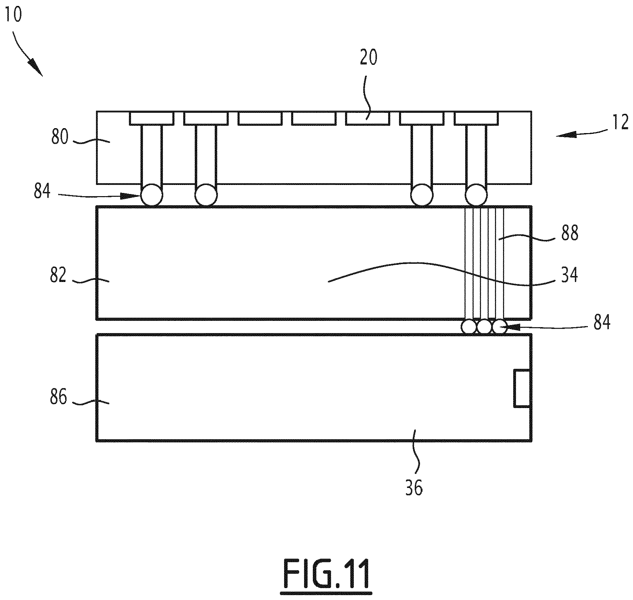

Alternativement, comme visible sur la figure 11, la communication entre la deuxième couche 82 et la troisième couche 86 est assurée par une interconnexion série 90 impliquant l'emploi d'une unité de mise en série des données (non représentée sur la figure 11) en sortie de l'unité de projection 34.

Une telle implémentation est indiquée lorsque l'emploi de vias traversants 88 empêche d'implémenter physiquement l'unité de projection 34. En effet, chaque via traversant 88 réduit l'espace utile, c'est-à-dire l'espace dans lequel l'unité de compensation 34 peut être fabriquée, ce qui peut rendre impossible d'implémenter physiquement l'unité de projection 34 par manque de place. Dans l'implémentation avec une interconnexion série 90, l'espace utile est au contraire très peu réduit comme l'illustre la comparaison entre les figures 10 et 11.

Dans chacun des cas proposés aux figures 9 à 11, le capteur événementiel 12 et le dispositif de compensation 16 font partie d'un même empilement 78 d'au moins deux couches 80, 82 et 86, la première couche 80 de l'empilement 78 comportant le capteur événementiel 12, l'au moins une autre couche 82 et éventuellement 86 de l'empilement 78 comportant l'unité de projection 34 et l'unité de compensation 36).

Le système d'observation 10 ainsi implémenté physiquement présente l'avantage d'être un système embarqué de faible encombrement.

D'autres modes de réalisation du système d'observation 10 sont encore possibles.

Par exemple, l'unité de compensation 36 est réalisée sur un autre composant, le composant et l'unité de compensation 36 étant rapportés sur un substrat comprenant des connexions électriques.

Selon un mode de réalisation, le substrat est un interposeur.

En variante ou en complément, le système d'observation 10 comporte un filtrage additionnel qui est mis en œuvre au niveau du capteur événementiel 12.

Le filtrage est, par exemple, un filtrage par groupe de pixels (typiquement 4). Lorsqu'un seul pixel d'un groupe de pixels génère un événement sans corrélation avec ses voisins, cet événement est considéré comme du bruit et donc éliminé.

Pour améliorer un tel filtrage, le groupe de pixels peut, dans certains cas, être programmable selon des règles.

Selon un autre mode de réalisation, le flux d'événements est représenté non sous la forme d'un flux non-continu et asynchrone d'impulsions mais comme une succession de matrices creuses, c'est-à-dire des matrices principalement vides.

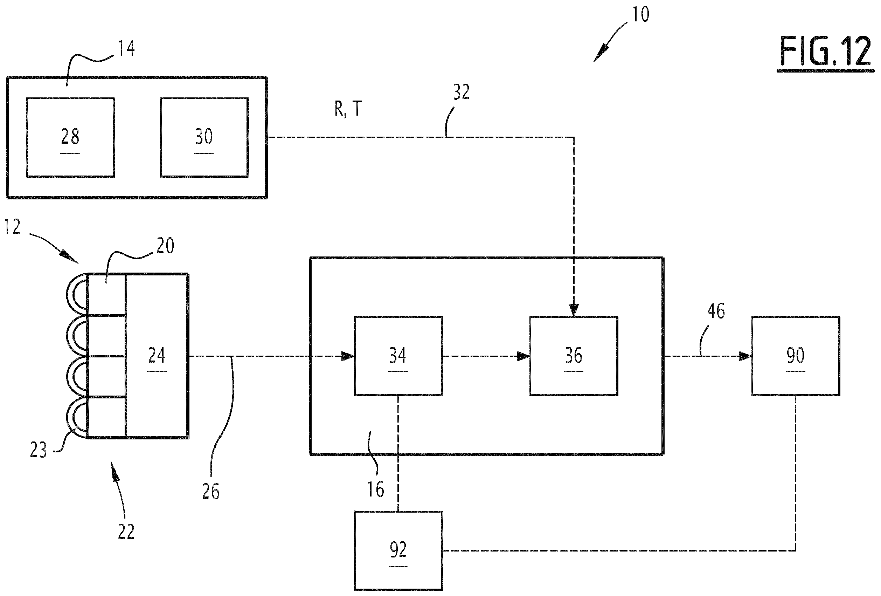

Un autre mode de réalisation est présenté en référence à la figure 12.

Dans un tel cas, le système d'observation 10

comporte, en outre, une unité de détermination 92 et une unité de modification 94.

L'unité de détermination 92 est propre à déterminer, pour chaque événement projeté du flux d'événements compensé F3, la nature mobile ou immobile d'un objet associé à l'événement enrichi.

Il est entendu par l'expression « objet associé à l'événement enrichi » que l'objet est l'objet imagé dans l'environnement par le capteur événementiel 12 ayant entraîné la génération de l'ensemble d'événements auquel appartient l'événement projeté.

Les bords d'un objet immobile apparaissent avec un meilleur contraste que ceux d'un objet mobile.

Ainsi, par exemple, l'unité de détermination 92 cherche la valeur du contraste des bords de chaque objet, compare cette valeur à un seuil et considère que l'objet est immobile uniquement lorsque la valeur de contraste est supérieure ou égale au seuil.

Selon un autre mode de réalisation ou en combinaison, l'unité de détermination 92 utilise le troisième champ d'information C3.

L'unité de modification 94 est propre à modifier des paramètres du filtre convolutif selon si l'objet est mobile ou fixe, pour obtenir un filtre convolutif modifié.

A titre d'exemple, le seuil en tension $V_s$ de chaque neurone 54 et le taux de fuite sont modifiés en fonction de la nature de l'objet.

Avec le filtre convolutif ainsi modifié, la compensation effectuée par le dispositif de compensation 16 est itérée.

Plus précisément, l'étape de projection est à nouveau mise en œuvre par l'unité de projection 34 pour obtenir un nouveau flux d'événements projeté F2.

L'unité de compensation 36 compense ensuite le mouvement du capteur événementiel 12 dans le flux d'événements initial F1 pour obtenir un flux d'événements compensé F3.

Cela permet d'obtenir un flux d'événements compensé F3 dans lequel le mouvement du capteur événementiel 12 est mieux compensé pendant l'intervalle de temps d'observation.

Un tel effet serait aussi obtenu si le filtre convolutif ainsi modifié est appliqué à un flux d'événements initial F1 généré à un instant postérieur à l'intervalle de temps d'observation.

Selon d'autres modes de réalisation, la détermination de la nature mobile ou immobile de l'objet est exploitée par l'unité de modification 92 pour modifier d'autres parties du système d'observation 10.

Selon un premier exemple, l'ensemble des événements provenant de certains pixels sont éliminés car l'objet imagé est statique. Cela permet de réduire la quantité de données à traiter.

Selon un deuxième exemple, en supposant que le flux d'événements est représenté comme une succession de matrices creuses comme proposé précédemment, la fréquence de sortie des matrices creuses corrigées en sortie de la sous-deuxième unité de compensation 42 est réduite en diminuant la fréquence de génération des événements du capteur événementiel. Par exemple, la fréquence choisie dépend du rapport entre le nombre d'objets immobiles et le nombre total d'objets imagés.

Cela permet également de réduire fortement la quantité de données à traiter.

Il est à noter que rien n'empêche que l'unité de détermination 90 et une unité de modification 92 soient implémentées physiquement à proximité du capteur événementiel 12, notamment dans la troisième couche 86.

Selon d'autres modes de réalisation correspondant notamment à des applications dans lesquels l'implémentation matérielle est moins contrainte, le réseau de neurones 50 que l'unité de projection 34 implémente physiquement pourrait comprendre plus de couche de neurones 52 ou une unique couche de neurones 52 entièrement connectée.

Dans un tel cas, l'implémentation physique du dispositif de compensation 16 est, par exemple, une implémentation informatique.

A titre non limitatif, un exemple d'une telle implémentation est maintenant décrit en référence à un ordinateur.

L'interaction d'un produit programme d'ordinateur un ordinateur permet de mettre en oeuvre le procédé de compensation des défauts introduits par un capteur événementiel 12 dans le flux d'événements initial F1. Le procédé de compensation est ainsi un procédé mis en œuvre par ordinateur.

Plus généralement, l'ordinateur est un calculateur électronique propre à manipuler et/ou transformer des données représentées comme des quantités électroniques ou physiques dans des registres du calculateur et/ou des mémoires en d'autres données similaires correspondant à des données physiques dans des mémoires, des registres ou d'autres types de dispositifs d'affichage, de transmission ou de mémorisation.

Il est à noter que, dans la présente description, l'expression « propre à » signifie indifféremment « adapté pour », « adapté à » ou « configuré pour ».

L'ordinateur comporte un processeur comprenant une unité de traitement de données, des mémoires et un lecteur de support d'informations. L'ordinateur comprend, en variante et en supplément, un clavier et une unité d'affichage.

Le produit programme d'ordinateur comporte un support lisible d'informations.

Un support lisible d'informations est un support lisible par l'ordinateur, usuellement par le lecteur. Le support lisible d'informations est un médium adapté à mémoriser des instructions électroniques et capable d'être couplé à un bus d'un système informatique.

A titre d'exemple, le support lisible d'informations est une disquette ou disque souple (de la dénomination anglaise de « *floppy disk* »), un disque optique, un CD-ROM, un disque magnéto-optique, une mémoire ROM, une mémoire RAM, une mémoire EPROM, une mémoire EEPROM, une carte magnétique ou une carte optique.

Sur le support lisible d'informations est mémorisé un programme d'ordinateur comprenant des instructions de programme.

Le programme d'ordinateur est chargeable sur l'unité de traitement de données et est adapté pour entraîner la mise en œuvre du procédé de compensation.

Dans chacun des modes de réalisation présentés précédemment et qui peuvent être combinés entre eux pour former de nouveaux modes de réalisation lorsque cela est techniquement possible, il est proposé un dispositif ou un procédé permettant de compenser le mouvement du capteur événementiel dans un flux d'événements généré lors d'une observation d'un environnement qui réduit la capacité calculatoire requise pour permettre une implémentation physique dans un système embarqué tout en conservant les informations utiles captées par le capteur événementiel.

Un tel dispositif ou procédé est donc particulièrement adapté pour toute application liée à la vision embarquée. Parmi ces applications, à titre non exhaustif, il peut être mentionné la surveillance, la réalité augmentée, la réalité virtuelle ou les systèmes de vision des véhicules autonomes ou des drones.

**Revendications**

1. Dispositif de compensation (16) du mouvement d'un capteur événementiel (12) dans un flux d'événements généré dans un intervalle de temps, dit flux d'événements initial (F1), le flux d'événements initial (F1) étant généré par le capteur événementiel (12) lors d'une observation d'un environnement dans l'intervalle de temps, le capteur événementiel (12) comportant :

   - des pixels (20), chaque pixel (20) étant propre à générer un événement initial du flux d'événements initial (F1), et
   - une unité de lecture (24), l'unité de lecture (24) étant propre à générer des informations représentant chaque événement initial sous forme d'une première pluralité de champs d'information dans un premier espace, la première pluralité de champs d'information comprenant :

      - un premier champ d'information correspondant à l'adresse du pixel (20) qui a généré l'événement initial, et
      - un deuxième champ d'information correspondant à l'instant de génération de l'événement par le pixel (20) qui a généré l'événement initial,

   le dispositif de compensation (16) comprenant :

- une unité de projection (34), l'unité de projection (34) étant propre à :

- projeter le flux d'événements initial (F1) depuis le premier espace vers un deuxième espace par utilisation d'une fonction de projection pour obtenir un flux d'événements projeté (F2), le flux d'événements projeté (F2) étant un ensemble d'événements projetés, chaque événement projeté étant associé à un ensemble d'événements initiaux provenant d'un groupe de pixels respectif, l'unité de projection (34) projetant le flux d'événements initial (F1) vers le deuxième espace pour que le rapport entre le nombre d'événements initiaux du flux d'événements initial (F1) et le nombre d'événements projetés du flux d'événements projeté (F2) soit strictement supérieur à 1,
- générer des informations représentant chaque événement projeté sous forme d'une deuxième pluralité de champs d'information dans le deuxième espace, la deuxième pluralité de champs d'information comprenant :

- un premier champ d'information correspondant à l'adresse d'un pixel (20) associé à l'événement projeté,
- un deuxième champ d'information étant un instant caractéristique de l'événement projeté, et
- un troisième champ d'information étant une valeur relative à l'ensemble d'événements initiaux auquel l'événement projeté est associé, et

- une unité de compensation (36), l'unité de compensation (36) étant propre à recevoir des mesures du mouvement du capteur événementiel (12) pendant l'intervalle de temps, et propre à appliquer une technique de compensation au flux d'événements projeté (F2) en fonction des mesures reçues pour obtenir un flux d'événements compensé (F3) dans l'intervalle de temps.

2. Dispositif de compensation selon la revendication 1, dans lequel l'unité de projection (34) est un dispositif implémentant un réseau de neurones.

3. Dispositif de compensation selon la revendication 2, dans lequel le réseau de neurones comporte une seule couche cachée.

4. Dispositif de compensation selon la revendication 2 ou 3, dans lequel la fonction de projection est un filtre convolutif à plusieurs noyaux de convolution, chaque noyau étant associée à un canal, le réseau de neurones étant ainsi un réseau de neurones convolutifs à impulsion et, dans lequel, pour chaque événement projeté, le troisième champ d'information comporte l'identifiant du canal du noyau de convolution auquel appartient ledit événement projeté.

5. Dispositif de compensation selon la revendication 4, dans lequel chaque noyau de convolution est un ensemble de champs récepteurs avec un motif identique, deux champs récepteurs successifs étant séparés d'un espacement, le nombre de noyaux de convolution, l'espacement et la taille des champs récepteurs étant choisis pour que le rapport entre le nombre d'événements initiaux du flux d'événements initial (F1) et le nombre d'événements projetés du flux d'événements projeté (F2) soit compris entre 1,5 et 100.

6. Dispositif de compensation selon l'une quelconque des revendications 2 à 5, dans lequel, pour chaque événement projeté, l'instant caractéristique de l'événement projeté est choisi dans la liste constituée de :

- un instant obtenu par application d'une fonction sur l'ensemble des instants auquel un neurone du réseau de neurones a reçu une activation, et
- un instant obtenu par application d'une fonction sur au moins un instant de génération d'un événement initial parmi l'ensemble des événements initiaux auquel l'événement projeté est associé.

7. Dispositif de compensation selon l'une quelconque des revendications 1 à 6, dans lequel l'unité de projection (34) et l'unité de compensation (36) sont réalisées sur un même circuit intégré.

8. Dispositif de compensation selon l'une quelconque des revendications 1 à 7, dans lequel chaque impulsion étant générée à un instant de génération, chaque pluralité de champ d'informations comporte un champ d'information supplémentaire, le champ d'information supplémentaire étant le signe du gradient d'intensité mesuré par le pixel (20) à l'instant de génération de l'impulsion, la valeur d'intensité lumineuse à l'instant de génération de l'impulsion ou la valeur du gradient d'intensité mesuré par le pixel (20) à l'instant de génération de l'impulsion.

9. Dispositif de compensation selon l'une quelconque des revendications 1 à 8, dans lequel la technique de compensation comporte l'application d'au moins une opération choisie parmi :

- une correction de la distorsion introduite par une optique de collection (23) du capteur événementiel (12),
- une multiplication du flux d'événements enrichis par une matrice de rotation correspondant aux mouvements en rotation du capteur événementiel (12), et

- une addition au flux d'événements enrichis d'une matrice de translation correspondant aux mouvements en translation du capteur événementiel (12).

10. Système d'observation (10) d'un environnement, le système d'observation (10) comprenant :

- un capteur événementiel (12) générant un flux d'événements (F1) lors d'une observation de l'environnement, le capteur événementiel (12) comportant des pixels (20) et une unité de lecture (24), chaque pixel (20) étant propre à générer un événement initial du flux d'événements initial (F1), l'unité de lecture (24) étant propre à générer des informations représentant chaque événement initial sous forme d'une pluralité de champs d'information dans un premier espace, la première pluralité de champs d'information comprenant un premier champ d'information correspondant à l'adresse du pixel (20) qui a généré l'événement initial et un deuxième champ d'information correspondant à l'instant de génération de l'événement par le pixel (20) qui a généré l'événement initial,

- une unité de mesure (14) propre à mesurer le mouvement du capteur événementiel pendant un intervalle de temps, et

- un dispositif de compensation (16) selon l'une quelconque des revendications 1 à 9.

11. Système d'observation selon la revendication 10, dans lequel le système d'observation (10) comporte, en outre :

- une unité de détermination (90), l'unité de détermination (90) étant propre à déterminer, pour chaque événement projeté du flux d'événements compensé (F3), la nature mobile ou immobile d'un objet associé à l'événement projeté, l'objet étant l'objet de l'environnement par le capteur événementiel (12) ayant entraîné la génération de l'ensemble d'événements associé à l'événement projeté, et

- une unité de modification (92), l'unité de modification (92) étant propre à modifier la fonction de projection selon si l'objet est mobile ou fixe.

12. Système d'observation selon la revendication 10 ou 11, dans lequel le capteur événementiel (12) et le dispositif de compensation (16) font partie d'un même composant comportant un empilement (78) d'au moins trois couches (80, 82, 86), la première couche (80) de l'empilement (78) comportant le capteur événementiel (12), la deuxième couche (82) de l'empilement (78) comportant l'unité de projection (34) et la troisième couche (86) comportant l'unité de compensation (36).

13. Système d'observation selon la revendication 10 ou 11, dans lequel l'unité de compensation (36) est réalisée sur un autre composant, le composant et l'unité de compensation (36) étant rapportés sur un substrat comprenant des connexions électriques.

14. Système d'observation selon la revendication 13, dans lequel le substrat est un interposeur.

15. Procédé de compensation du mouvement d'un capteur événementiel (12) dans un flux d'événements généré dans un intervalle de temps, dit flux d'événements initial (F1), le flux d'événements initial (F1) étant généré par le capteur événementiel (12) lors d'une observation d'un environnement dans l'intervalle de temps, le capteur événementiel (12) comportant :

- des pixels (20), chaque pixel (20) étant propre à générer un événement initial du flux d'événements initial (F1), et

- une unité de lecture (24), l'unité de lecture (24) étant propre à générer des informations représentant chaque événement initial sous forme d'une première pluralité de champs d'information dans un premier espace, la première pluralité de champs d'information comprenant :

- un premier champ d'information correspondant à l'adresse du pixel (20) qui a généré l'événement initial et

- un deuxième champ d'information correspondant à l'instant de génération de l'événement par le pixel (20) qui a généré l'événement initial,

le procédé de compensation étant mis en œuvre par un dispositif de compensation (16) du mouvement du capteur événementiel (12) dans le flux d'événements généré dans un intervalle de temps et comprenant:

- une étape de projection comprenant la projection du flux d'événements initial (F1) depuis le premier espace vers un deuxième espace par utilisation d'une fonction de projection pour obtenir un flux d'événements projeté (F2), le flux d'événements projeté (F2) étant un ensemble d'événements projetés, chaque événement projeté étant associé à un ensemble d'événements initiaux provenant d'un groupe de pixels respectif,

la projection projetant le flux d'événements initial (F1) vers le deuxième espace pour que le rapport entre le nombre d'événements initiaux du flux d'événements initial (F1) et le nombre d'événements projetés du flux d'événements projeté (F2) soit strictement supérieur à 1,

l'étape de projection comprenant la génération des informations représentant chaque événement projeté sous forme d'une pluralité de champs d'information dans le deuxième espace, la deuxième pluralité de champs d'information comprenant :

- un premier champ d'information correspondant à l'adresse d'un pixel (20) associé à l'événement projeté,
- un deuxième champ d'information étant un instant caractéristique de l'événement projeté, et
- un troisième champ d'information étant une valeur relative à l'ensemble d'événements initiaux auquel l'événement projeté est associé, et

- une étape de compensation comprenant l'application d'une technique de compensation au flux d'événements projeté (F2) en fonction de mesures reçues du mouvement du capteur événementiel (12) pendant l'intervalle de temps pour obtenir un flux d'événements compensé (F3) dans l'intervalle de temps.

EP 3 979 648 A1

FIG.1

14

28    30

R, T                    32

10

12

20

38

24

34    36

46

23

22

26

16

F1
(A1, A2, A3)

F2
(B1, B2, B3, B4)

F3
(C1, C2, C3, C4)

## FIG.2

EP 3 979 648 A1

FIG.3

FIG.4

EP 3 979 648 A1

A

B

C

## FIG.5

EP 3 979 648 A1

FIG.6

FIG.7

FIG.8

## FIG.9

**FIG.10**

**FIG.11**

EP 3 979 648 A1

FIG.12

Europäisches
Patentamt

European
Patent Office

Office européen
des brevets

**RAPPORT DE RECHERCHE EUROPEENNE**

Numéro de la demande

EP 21 19 9859

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2020/265590 A1 (DANIILIDIS KONSTANTINOS [US] ET AL) 20 août 2020 (2020-08-20)<br>* abrégé *<br>* alinéas [0027] - [0034], [0041] - [0047], [0054] - [0057], [0061], [0064], [0067] - [0069], [0096], [0115], [0121] *<br>* figures 2,8,12,15 *<br>* revendications 1,4 *<br>----- | 1-15 | INV.<br>H04N19/51<br>H04N19/80<br>G06N3/02<br>G06N3/08<br>G06T7/269<br>G06T7/579<br>G06T5/00<br>G06T5/50 |
| A | HENRI REBECQ ET AL: "Real-time Visual-Inertial Odometry for Event Cameras using Keyframe-based Nonlinear Optimization",<br>BRITISH MACHINE VISION CONFERENCE 2017,<br>7 septembre 2017 (2017-09-07),<br>XP055417240,<br>* section "4.1.1 Synthesis of Motion-Corrected Event Frames" *<br>----- | 1-15 | |
| A | ALEX ZIHAO ZHU ET AL: "EV-FlowNet: Self-Supervised Optical Flow Estimation for Event-based Cameras",<br>ARXIV.ORG, CORNELL UNIVERSITY LIBRARY, 201 OLIN LIBRARY CORNELL UNIVERSITY ITHACA, NY 14853,<br>19 février 2018 (2018-02-19), XP081259328,<br>DOI: 10.15607/RSS.2018.XIV.062<br>* le document en entier *<br>----- | 1-15 | DOMAINES TECHNIQUES RECHERCHES (IPC)<br>H04N<br>G06T<br>G06N |

-/--

Le présent rapport a été établi pour toutes les revendications

| Lieu de la recherche | Date d'achèvement de la recherche | Examinateur |
|---|---|---|
| Munich | 26 janvier 2022 | Fassnacht, Carola |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
................................................................
& : membre de la même famille, document correspondant

EPO FORM 1503 03.82 (P04C02)

**page 1 de 2**

Europäisches
Patentamt

European
Patent Office

Office européen
des brevets

# RAPPORT DE RECHERCHE EUROPEENNE

Numéro de la demande

EP 21 19 9859

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | ZHU ALEX ZIHAO ET AL: "Unsupervised Event-Based Learning of Optical Flow, Depth, and Egomotion", 2019 IEEE/CVF CONFERENCE ON COMPUTER VISION AND PATTERN RECOGNITION (CVPR), IEEE, 15 juin 2019 (2019-06-15), pages 989-997, XP033687065, DOI: 10.1109/CVPR.2019.00108 * le document en entier * ----- | 1-15 | |

DOMAINES TECHNIQUES RECHERCHES (IPC)

Le présent rapport a été établi pour toutes les revendications

| Lieu de la recherche | Date d'achèvement de la recherche | Examinateur |
|---|---|---|
| Munich | 26 janvier 2022 | Fassnacht, Carola |

page 2 de 2

**EP 3 979 648 A1**

## ANNEXE AU RAPPORT DE RECHERCHE EUROPEENNE
## RELATIF A LA DEMANDE DE BREVET EUROPEEN NO.

EP 21 19 9859

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

26-01-2022

| Document brevet cité<br>au rapport de recherche | Date de<br>publication | Membre(s) de la<br>famille de brevet(s) | Date de<br>publication |
|---|---|---|---|
| US 2020265590 A1 | 20-08-2020 | AUCUN | |